# FASCICULE DE BREVET EUROPEEN

(11) **EP 1 322 461 B1**
(45) Date de publication et mention de la délivrance du brevet: **05.10.2005**
(21) Numéro de dépôt: 01980418.6
(22) Date de dépôt: 20.09.2001
(51) Int. Cl.: B29D 30/54

(54) **DISPOSITIF DE CHAPAGE D'UNE CARCASSE DE PNEUMATIQUE**
VORRICHTUNG ZUM AUFLEGEN DER LAUFFLÄCHE AUF EINE REIFENKARKASSE
DEVICE FOR TREADING A TYRE CARCASS

(30) Priorité: 22.09.2000 FR 0012248
(43) Date de publication de la demande: 02.07.2003
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: CHAMOY, François, F-63400 Chamalières (FR)
(74) Mandataire: Le Cam, Stéphane Georges Elie
(86) Numéro de dépôt international: PCT/EP2001/010899
(87) Numéro de publication internationale: WO 2002/024438

(56) Documents cités:
- FR-A- 2 790 994
- US-A- 3 802 978
- US-A- 3 895 985
- US-A- 4 053 265
- US-A- 4 123 306
- US-A- 5 098 268

## Description

L'invention concerne un procédé de chapage de carcasses de pneumatiques vulcanisées. Aujourd'hui, on fait appel à ces procédés généralement dans le cadre du rechapage mais, bien entendu, tout ce qui sera dit dans la suite est valable pour le chapage de carcasses de pneumatiques neuves.

Il existe deux principaux types de procédé de rechapage consistant pour l'un, couramment appelé " rechapage à froid ", à utiliser une bande de roulement précuite que l'on dispose sur une carcasse prête à être rechapée, puis à cuire l'ensemble en utilisant des moyens de chauffage tels qu'une étuve; l'autre procédé, dit "rechapage à chaud ", consiste à poser une bande de roulement crue, sous forme notamment de feuilles, de bandelettes ou de profil, sur une carcasse prête à être rechapée, puis à cuire l'ensemble dans un moule.

Ces procédés de rechapage à chaud s'appliquent en particulier au rechapage de pneumatiques de grandes dimensions tels que des pneumatiques destinés aux poids lourds, machines agricoles, véhicules de génie civil, etc., pour lesquels des problèmes de manutention et de déformation de bandes de roulement rendent difficile leur utilisation sous une forme précuite. L'invention se situe dans le domaine du rechapage à chaud.

Parmi les procédés de rechapage à chaud, la publication US 4 053 265 décrit un procédé qui consiste à utiliser un moule annulaire élastique, préférentiellement réalisé en caoutchouc, destiné à permettre le moulage et la vulcanisation de la bande de roulement. Ce moule élastique est disposé sur la carcasse de pneumatique à rechaper qui a été préalablement recouverte par une bande de roulement crue, l'ensemble moule-carcasse étant ensuite entièrement enveloppé par une membrane assurant l'étanchéité. Cet ensemble est ensuite placé dans une étuve pour la cuisson après réalisation du vide dans la membrane.

Plus précisément, afin de pouvoir assurer une parfaite étanchéité entre la carcasse, la bande de roulement et le moule élastique, comme le montre la publication US 4 053 265 (Figure 2), il est nécessaire de réaliser l'enveloppement de la carcasse recouverte du moule à l'aide de deux membranes élastiques : une membrane dite " intérieure " qui s'étend à partir de la surface extérieure des flancs sur toute la surface intérieure de la carcasse et une membrane dite " extérieure " qui est recouverte par la première membrane au niveau de la surface extérieure des flancs, ou inversement, afin de garantir la continuité de l'étanchéité entre les deux membranes, cette membrane extérieure recouvre ainsi toute la surface extérieure du moule et de la partie des flancs non recouverte par la membrane intérieure.

La mise en place de ces membranes est particulièrement difficile. En effet, il est nécessaire d'étirer très fortement la membrane extérieure afin qu'elle puisse recouvrir l'ensemble de la bande de roulement et des flancs, cette opération étant rendue encore plus délicate par le fait qu'il s'agisse généralement de pneumatiques de grandes dimensions. Ce problème de mise en place entraîne, de plus, une très grande rapidité d'usure de cette membrane extérieure soumise à de grandes sollicitations élastiques et des risques fréquents de déchirures, ceci ayant pour conséquence la nécessité de changer fréquemment ces membranes sans exclure les risques d'utiliser une membrane abîmée génératrice de défauts dans le pneumatique réalisé.

La publication US 4 053 265 propose une alternative à l'utilisation de ces deux membranes, qui consiste à utiliser une membrane extérieure identique à celle de la première solution si ce n'est qu'elle utilise un joint torique afin de réaliser l'étanchéité au niveau des flancs et une membrane intérieure au pneumatique sous forme d'une chambre à air reliée à un disque support de l'enveloppe de pneumatique. Il est clair que cette solution ne résout pas les problèmes précités liés à l'utilisation de la membrane extérieure, et que, de plus, cette solution ne peut permettre de réaliser une bonne étanchéité qu'à la condition de vulcaniser les joints toriques sur les flancs de la carcasse de pneumatique, ce qui est problématique.

La demande de brevet français déposée par la demanderesse sous le numéro 99/03499 le 19 mars 1999 et non encore publiée à ce jour, décrit un dispositif de chapage d'une carcasse de pneumatique vulcanisée à l'aide d'une bande de roulement crue comprenant une jante de montage et un moule annulaire élastique destiné à assurer le moulage de ladite bande. Ce dispositif comprend également deux flasques élastiques destinés à recouvrir respectivement la surface extérieure de l'enveloppe de pneumatique ainsi constituée, comprise entre un bourrelet de ladite enveloppe et le bord périphérique du moule correspondant, chaque flasque se prolongeant sur son extrémité périphérique de plus grand diamètre par un manchon élastique recouvrant les épaules et partiellement le sommet du moule élastique.

Un tel dispositif permet de remédier aux inconvénients cités précédemment cependant reste le problème de la longévité de tels flasques. En effet, les flasques utilisés dans ce dispositif doivent à la fois assurer une très bonne étanchéité et présenter une grande élasticité. Ces propriétés sont particulièrement sollicitées lors de la cuisson où le moule élastique pénétrant dans le mélange caoutchouteux de la bande de roulement, son diamètre diminue et les flasques, plus précisément leur prolongements sous forme de manchons recouvrant le sommet du moule, doivent suivre ces variations de diamètre en continuant d'assurer l'étanchéité. Les caoutchoucs permettant d'obtenir ce compromis de propriété ne permettent pas une utilisation des flasques au-delà d'une dizaine de cycles.

L'invention vise à pallier l'ensemble des inconvénients précités.

La demanderesse a découvert de façon surprenante qu'en s'éloignant des principes énoncés précédemment et en utilisant pour les flasques des mélanges caoutchouteux présentant au contraire plus de rigidité et en modifiant structurellement le dispositif, on aboutit à une solution fiable et beaucoup plus endurante préservant néanmoins l'étanchéité indispensable au fonctionnement d'un tel dispositif.

Selon l'invention, le dispositif de chapage d'une carcasse de pneumatique vulcanisée à l'aide d'une bande de roulement crue comprend une jante de montage de ladite carcasse, un moule annulaire élastique dont la surface extérieure circonférentielle est recouverte d'un manchon élastique, le moule étant destiné à assurer le moulage de la bande de roulement crue, le dispositif comprend également deux flasques élastiques en forme de disque destinés à recouvrir respectivement un flanc de l'ensemble composé de l'enveloppe de pneumatique constituée recouverte du moule, l'extrémité périphérique de plus grand diamètre de chaque flasque portant un élément annulaire rigide de liaison avec le manchon recouvrant le moule.

En effet, cette liaison par l'intermédiaire d'un élément rigide combiné aux propriétés élastiques des flasques permet l'obtention d'un dispositif simple à mettre en place et possédant une bonne résistance à l'usure.

Avantageusement, chaque élément annulaire rigide réalise une liaison élastique entre le manchon recouvrant le moule et le flasque portant ledit élément. L'élasticité de cette liaison permet d'assurer l'étanchéité de celle-ci lors des variations de diamètre du moule au cours des différentes phases de cuisson.

De plus, il est intéressant notamment pour avoir une bonne résistance à l'usure et une mise en place aisée des flasques, qui sont comme on l'a dit des disques recouvrant les flancs de l'ensemble formé par l'enveloppe de pneumatique et le moule, que les flasques soient élastiques mais en présentant néanmoins une certaine rigidité et en continuant à garantir l'étanchéité, tels que des flasques réalisés à partir de caoutchouc butyl.

D'autres avantages et caractéristiques de l'invention apparaîtront à la lecture d'un exemple de réalisation d'un dispositif de rechapage conforme à l'invention en référence au dessin annexé dans lequel :
- la figure 1 est une coupe radiale partielle du dispositif de rechapage conforme à l'invention,
- La figure 2 est une coupe radiale partielle d'une variante de réalisation du dispositif de rechapage représenté sur la figure 1,
- La figure 3 est une coupe radiale partielle de la variante de réalisation du dispositif représenté sur la figure 2 partiellement éclatée.

Dans ce qui suit, on désignera par les mêmes références les éléments communs aux différentes variantes de réalisation du dispositif de rechapage.

On considérera une enveloppe de pneumatique à rechaper 1 comprenant une carcasse 2 comportant notamment deux bourrelets 21, 22 et deux flancs 23, 24 recouverte d'une bande de roulement crue 3, la bande de roulement ayant été déposée sur la carcasse 2 par tout moyen approprié, et des épaules 11, 12 reliant le sommet de la bande de roulement 3 aux flancs 23, 24.

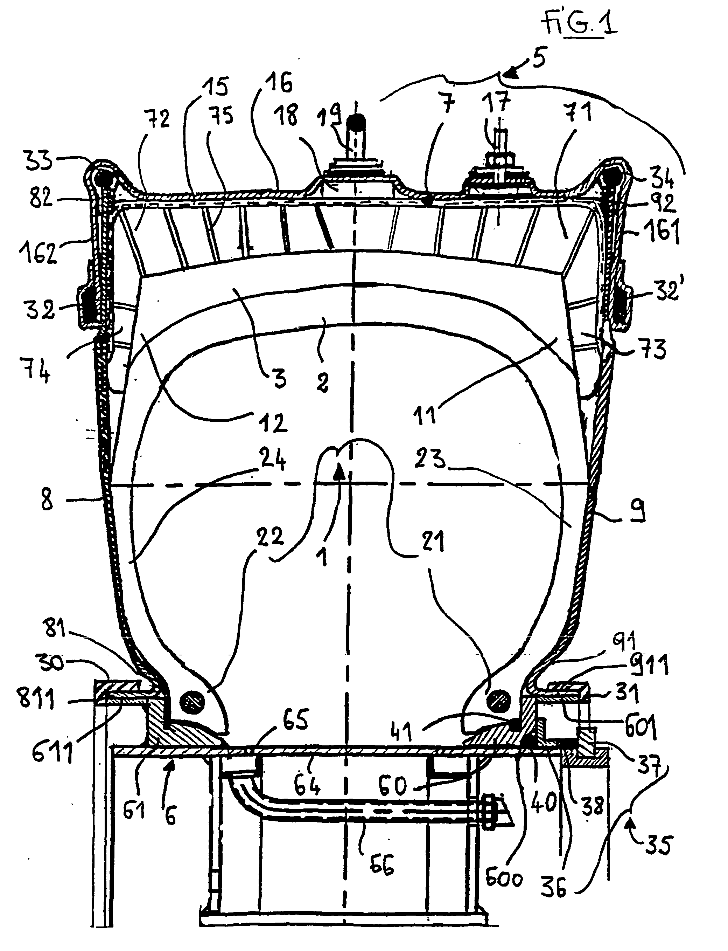

Selon la figure 1, le dispositif de rechapage 5 comprend une jante 6 sur laquelle l'enveloppe de pneumatique 1 doit être montée, un moule annulaire élastique 7 de moulage de la bande de roulement 3 et deux flasques élastiques 8 (8') et 9 (9') sous forme de disque destinés à recouvrir les flancs de l'ensemble constitué par l'enveloppe de pneumatique 1 recouverte du moule 7 afin d'assurer l'étanchéité de l'ensemble carcasse de pneumatique 2, bande de roulement 3, moule élastique 7 et jante 6. Le dispositif de rechapage mis en place sur une enveloppe de pneumatique est destiné à être placé dans une enceinte chauffée et pressurisée telle qu'une étuve.

Le moule élastique 7 se présente sous la forme d'un anneau dont la surface intérieure définit le moulage de la bande de roulement et qui possède des bords périphériques annulaires 71, 72 qui se prolongent sous forme d'ailes 73, 74 destinées à recouvrir respectivement les épaules 11, 12 de l'enveloppe de pneumatique 1.

Le moule annulaire 7 doit être suffisamment élastique dans une direction orientée radialement vers l'extérieur et résister à la chaleur de vulcanisation sans se déformer. Le moule doit également accepter de subir de multiples remises en température et résister au déchirement. On peut, à titre d'exemple, utiliser pour former ce moule annulaire un élastomère approprié pour obtenir les propriétés ci-dessus.

Ainsi, lorsque le moule 7 est étiré, son diamètre intérieur est supérieur au diamètre extérieur de l'enveloppe de pneumatique 1 comportant la bande de roulement crue 3, ce qui permet la mise en place du moule 7 sur cette dernière.

Un tel moule peut être réalisé à titre d'exemple conformément au procédé présenté dans la publication US 3 983 193 dans lequel on utilise une enveloppe de pneumatique neuve, en tant que "modèle de moulage", que l'on recouvre par une bande de caoutchouc vulcanisable crue. L'ensemble ainsi constitué est placé dans une étuve, après avoir été mis sous vide grâce à une membrane entourant cet ensemble, aux fins de réaliser la vulcanisation du moule. Le motif de moulage apparaissant sur la surface intérieure du moule correspond au négatif de la sculpture de la bande de roulement de l'enveloppe de pneumatique neuve utilisée.

Le moule 7 étant extrait de son " modèle de moulage ", il est nécessaire de percer dans le moule des évents 75 qui s'étendent radialement à travers l'épaisseur de ce dernier pour l'utilisation future du moule afin d'autoriser une évacuation de l'air compris entre le moule et la carcasse à rechaper recouverte d'une bande de roulement crue durant le moulage et la vulcanisation de cette bande de roulement.

Afin de limiter et de contrôler la pénétration du moule 7 dans la bande de roulement, on peut prévoir des inserts métalliques 18 à l'intérieur du moule répartis le long de la circonférence de ce dernier et tels que l'ensemble de ces inserts forment une couronne dont les secteurs sont jointifs en position comprimée du moule. De plus, ces inserts métalliques peuvent permettre la fixation d'anneaux de traction 19 afin de faciliter les opérations de démoulage de l'enveloppe de pneumatique cuite.

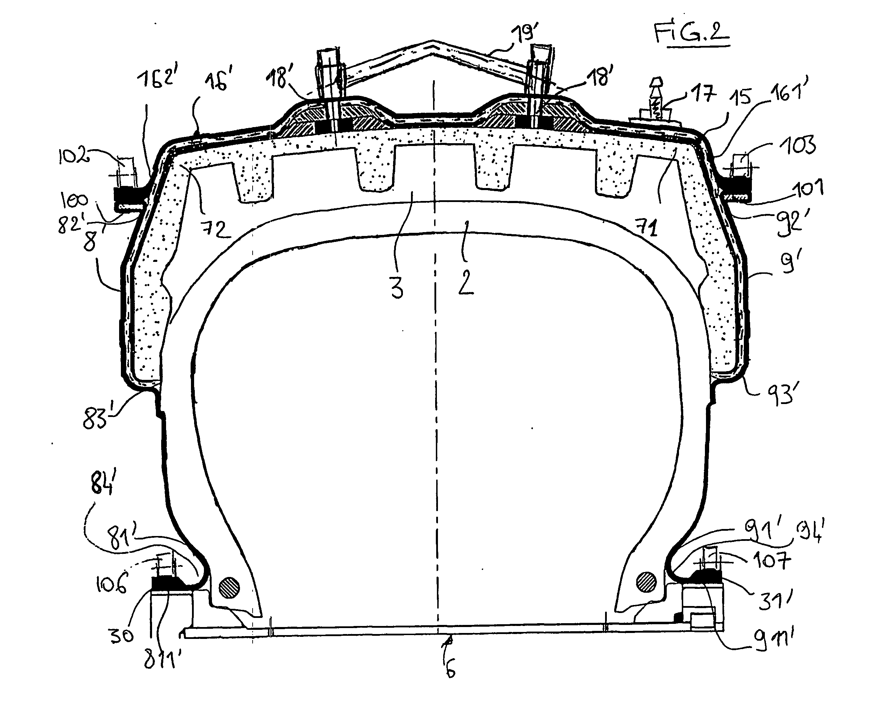

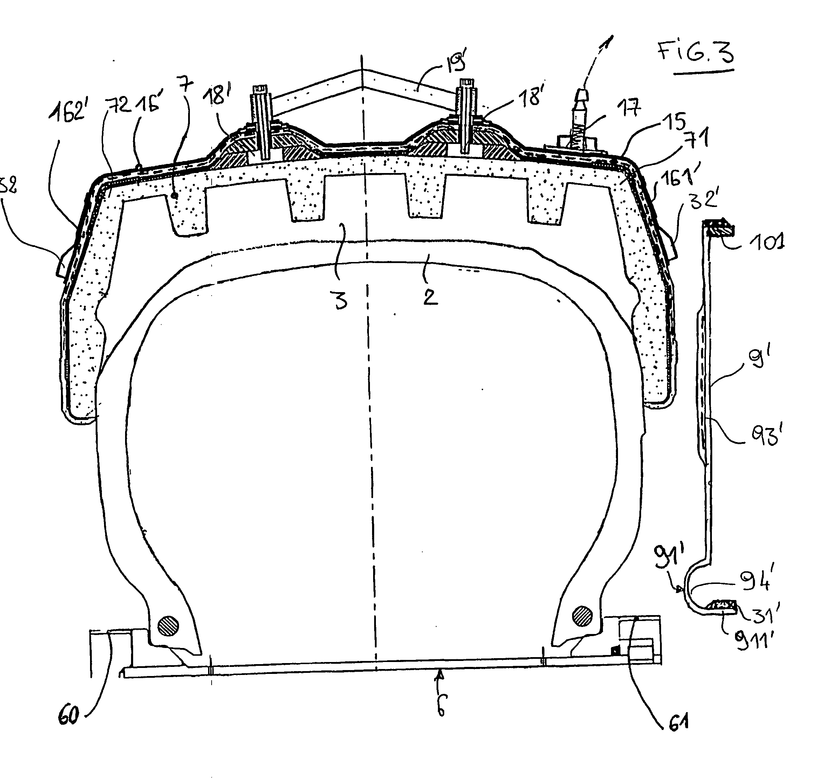

On peut également prévoir selon la variante de réalisation représentée sur les figures 2 et 3, la présence d'inserts 18' le long de deux trajectoires circonférentielles afin de permettre le positionnement par vissage de poignées 19'.

La surface circonférentielle extérieure du moule annulaire 7 est recouverte d'un premier manchon drainant élastique 15 permettant l'évacuation de l'air par l'intermédiaire des drains, qui peut être directement déposé sur le moule. Ce manchon drainant 15 peut être solidarisé au moule 7.

Le manchon drainant 15 est lui-même recouvert d'un manchon élastique étanche 16 (16') à base d'un mélange élastomérique vulcanisé. Une valve 17 anti-retour est intégrée au manchon élastique 16 (16') afin de permettre de faire le vide et de le maintenir. On peut prévoir sous la valve une grille, non représentée, anti-extrusion en métal déployé pour éviter tout risque d'enfoncement de la valve dans le caoutchouc du moule.

Selon un premier mode de réalisation de l'invention représenté sur la figure 1, le manchon 16 possède des ailes périphériques 162, 161 destinées à recouvrir les extrémités périphériques de grand diamètre de chaque flasque 8, 9 afin de permettre la réalisation d'une liaison étanche entre chaque flasque 8, 9 et ledit manchon 16. L'extrémité libre de chacune de ses ailes 161, 162 porte un tendeur radial 32', 32 fixé ou vulcanisé sur cette dernière.

Les flasques 8, 9 sont réalisés à partir d'un matériau élastique et étanche, ce qui rend particulièrement intéressant l'utilisation de matériaux caoutchouteux qui réalisent un bon compromis entre la résistance thermique et l'élasticité. De plus, on souhaite également un matériau qui tout en présentant de l'élasticité, possède une certaine rigidité permettant aux flasques notamment, comme on le verra plus précisément dans ce qui suit, d'avoir une meilleure résistance en usure. On peut donc choisir de réaliser les flasques à partir de caoutchouc butyl qui possèdent l'ensemble de ces propriétés.

Chaque flasque 8, 9 possède une extrémité périphérique de petit diamètre 81, 91 destinée à être positionnée sur la jante 6 au contact d'un talon de jante et une extrémité périphérique de grand diamètre 82, 92 dont le diamètre est légèrement supérieur ou égal à celui du moule 7 au repos.

L'extrémité de petit diamètre 81 (91) du flasque 8 (9) est maintenue en contact étanche avec le talon de jante correspondant 61 (60) en formant un rebord cylindrique 811 (911) au contact d'une surface 611 (601) porté par le talon de jante correspondant. Chaque rebord 811, 911 est maintenu sur la surface respectivement 611, 601 par l'intermédiaire d'un anneau plat 30,31 disposé sur chaque rebord. Cet anneau peut être notamment réalisé en silicone.

Selon une variante non représentée, on peut envisager au niveau des extrémités 81 et 91 de plus faible diamètre des flasques 8 et 9 la formation d'un soufflet permettant d'accepter certaines variations de diamètre des flasques sans solliciter l'allongement de ces derniers. En effet, l'élasticité du matériau constitutif des flasques peut être dans certains cas insuffisante puisque l'on la limite comme on l'a précisé précédemment.

Sur l'extrémité de grand diamètre 82 (92) est fixée respectivement un élément annulaire de liaison 33 (34) qui permet d'assurer une liaison élastique avec le manchon 16, cet élément rigide 33 (34) pouvant être ou non enrobé d'un mélange caoutchouteux qui peut être directement l'extrémité du flasque afin de préserver l'étanchéité de la liaison.

Une variante de réalisation du dispositif est représentée sur les figures 2 et 3, la figure 2 illustrant le dispositif en place sur la carcasse alors que sur la figure 3 les flasques 8' et 9' ne sont pas positionnés, le flasque 9' étant approché avant sa mise en place sur la carcasse et le moule.

Le manchon 16' possède des ailes périphériques 162', 161' destinées à recouvrir les épaules 72 et 71 du moule 7, l'extrémité libre de chacune de ses ailes 161', 162' porte un anneau plat en caoutchouc 32', 32 vulcanisé sur cette dernière et destiné à coopérer avec un anneau rigide métallique 101, 100 porté par chaque flasque 9', 8' tels que représentés sur la figure 3.

Les éléments du dispositif étant positionnés sur l'ensemble carcasse-bande de roulement, chaque anneau plat 32' (32") est en appui sur l'anneau rigide correspondant 100 (101) provoquant donc un retournement de l'extrémité 161' (162') porteuse dudit anneau plat, comme le montre la figure 2, chaque ensemble étant maintenu par une ceinture 102 (103) s'étendant circonférentiellement et verrouillée par un tendeur à fermeture rapide. Préférentiellement les anneaux métalliques sont recouverts de caoutchouc pour assurer l'étanchéité de la liaison.

Les flasques 8, 9 sont réalisés à partir d'un matériau élastique comme précisé pour le premier mode de réalisation de l'invention.

Chaque flasque 8, 9 possède une extrémité périphérique de petit diamètre 81', 91' destinée à être positionnée sur la jante 6 au contact d'un talon de jante et une extrémité périphérique de grand diamètre 82', 92' dont le diamètre est inférieur à celui du moule 7 au repos. Sur l'extrémité de grand diamètre 82' (92') est fixée respectivement l'anneau rigide métallique 100, 101.

L'extrémité de petit diamètre 81' (91') du flasque 8' (9') est maintenue en contact étanche avec le talon de jante correspondant 61 (60) en formant un rebord cylindrique 811' (911') portant un anneau plat 30 , 31' en caoutchouc, au contact d'une surface portée par la jante. Chaque rebord 811', 911' est maintenu sur la jante par une ceinture 106 (107) verrouillée par un tendeur à fermeture rapide.

Comme le montre la figure 3, l'extrémité de petit diamètre 91' du flasque 9' (et symétriquement pour le flasque 8') porte une boucle 94' (84') permettant d'accepter les tensions et déformations subies par les flasques sous l'action de la pression de l'autoclave au moment de la cuisson.

Avantageusement, une partie 83' (93') de chaque flasque 8' (9') est renforcée par de fils aramide disposés parallèlement les uns au autres dans la direction radiale afin d'éviter lors du moulage où le moule va s'enfoncer dans la bande de roulement, qu'une partie du flasque ne s'insère entre le moule et la carcasse de pneumatique. Ainsi, cette zone renforcée se situe au niveau du recouvrement de l'extrémité des ailes du moule et des flancs du pneumatique.

Par ailleurs, quelle que soit la variante considérée, le dispositif 5 comprend également, comme on l'a dit précédemment, une jante 6 sur laquelle la carcasse de pneumatique est montée et gonflée. En effet, il est important lors de la mise en place du moule élastique 7 sur la bande de roulement que l'enveloppe de pneumatique soit gonflée, afin d'une part d'assurer une résistance à la pression qui va être exercée par le moule sur l'enveloppe et d'avoir une présentation uniforme de l'enveloppe vis-à-vis du moule pour faciliter sa mise en place et son centrage sur la bande de roulement.

Par ailleurs, il faut assurer une bonne étanchéité entre la carcasse et la jante en particulier lorsque le fluide utilisé dans l'étuve est de la vapeur d'eau. En effet, dans ce cas, si l'étanchéité n'est pas assurée, de l'eau s'accumule à l'intérieur de l'enveloppe de pneumatique ce qui entraîne des risques de cuisson irrégulière de l'enveloppe.

L'assurance d'une telle étanchéité ne pose pas de difficultés majeures dans le cas du chapage d'une carcasse de pneumatique neuve, en revanche pour le rechapage le problème est plus délicat du fait de la déformation des bourrelets de l'enveloppe de pneumatique. En effet, les bourrelets de ces enveloppes de pneumatique qui ont déjà été montées, ont subi de façon connue une déformation qui consiste en un resserrement des deux bourrelets l'un vers l'autre. Il n'est donc pas possible d'utiliser en tant que support de montage de la carcasse recouverte du dispositif de rechapage, une jante habituelle correspondant à l'enveloppe de pneumatique, l'écartement des bourrelets ayant changé.

Une solution consiste à utiliser pour le rechapage une jante munie d'une chambre à air. L'inconvénient de cette solution, outre le fait qu'elle impose l'utilisation d'une membrane supplémentaire constituée par la chambre à air, consiste dans le fait qu'il est nécessaire d'utiliser une jante dont la dimension correspondant à celle de l'enveloppe de pneumatique à rechaper, donc une jante pour chaque dimension (ce qui est également le cas dans l'utilisation d'une jante ordinaire pour le chapage d'une carcasse de pneumatique neuve).

La jante décrite ci-après permet un montage et démontage aisé de l'enveloppe de pneumatique sans nécessiter la présence d'une chambre à air, et qui permet à une même jante de s'adapter à des enveloppes de pneumatiques de même diamètre de site mais de largeurs différentes dans une plage donnée. Ainsi la carcasse de pneumatique à chaper est gonflée sur cette jante par action directe d'un fluide sur les parois intérieures de ladite carcasse.

Cette jante 6 comprend un corps sous forme d'une virole 64 qui porte un talon fixe 61 de support d'un des bourrelets de l'enveloppe de pneumatique et un talon mobile 60 de support de l'autre bourrelet.

Le talon mobile 60 est monté coulissant sur la virole 64 et extractible par rapport à cette dernière, la jante 6 comportant également un système de verrouillage 35 qui permet de maintenir le talon mobile 60 sur la virole 64 et de limiter l'écartement maximal entre les deux talons 60, 61.

Ce système de verrouillage 35 est composé par une rondelle d'appui 36 pour le talon mobile 60, elle-même montée coulissante sur la virole 64 et extractible de cette dernière, et une couronne de verrouillage 37 extractible qui vient se fixer rigidement sur la virole 64. Cette couronne 37 forme dans sa position " fixée " une limitation sur la virole 64 de la position du talon mobile 60 vers l'extérieur de la jante, en constituant une butée pour la rondelle 36 sur laquelle vient s'appuyer le talon mobile 60, directement ou par l'intermédiaire d'une entretoise 38. En effet, il est aisé de prévoir l'utilisation d'entretoises tubulaires dimensionnelles disposées entre la rondelle d'appui et la couronne de verrouillage. De telles entretoises permettent de caler la jante sur la distance nominale d'entre-tringles correspondant à chaque dimension d'enveloppes de pneumatiques et, ainsi, d'autoriser l'utilisation d'une même jante pour des enveloppes de pneumatiques de dimensions différentes pour une plage donnée, par un simple changement d'entretoise.

Différentes possibilités sont envisageables pour la réalisation de la couronne de verrouillage 37 telle que des doigts portés par la couronne et orientés radialement vers l'intérieur de ladite couronne et qui coopèrent avec des orifices en forme de créneaux percés dans la virole 64. Après introduction des doigts dans les orifices, une simple rotation de la couronne 37 permet de verrouiller axialement ladite couronne sur la virole 64. Une telle réalisation ainsi qu'une variante de cette dernière sont décrites plus en détails dans la demande de brevet déposée sous le numéro 99/03499, plus particulièrement à la fin de la page 8 et au début de la page 9 en référence aux figures 3, 4, 5A, 5B et 6.

Quel que soit le système de verrouillage choisi, la jante 6 comporte également un joint d'étanchéité torique 40 dont le diamètre est inférieur à celui de la virole 64 pour l'étanchéité et qui est mis en place par coulissement dans un logement 600 circonférentiel prévu à cet effet et porté par le talon mobile 60. Sous l'effet de la pression lors du gonflage, une pré-étanchéité entre le talon mobile 60 et la virole 64 est réalisée par le joint torique 40, qui suffit à permettre l'écartement des talons 60, 61 jusqu'au contact de la rondelle d'appui 36 sur la couronne 37 ou de l'entretoise, qui provoque l'étanchéité finale du système.

De plus, il est intéressant de prévoir la présence sur chaque talon de jante 60, 61 d'un joint d'étanchéité torique 41, ou joint plat positionné dans un logement situé à la base de l'épaulement desdits talons de jante 60, 61 afin de garantir l'étanchéité de liaison talon de jante - bourrelet de l'enveloppe de pneumatique même dans le cas où, lors du gonflage, un bourrelet ne se plaque pas totalement sur cette base de l'épaulement.

Par ailleurs, un orifice 65 relié à une alimentation en air 66, est prévu dans la virole 64 afin de pouvoir réaliser le gonflage de la carcasse montée sur la jante.

On décrira le procédé de chapage, en particulier de rechapage, utilisant le dispositif décrit précédemment dans le premier mode de réalisation en référence à la figure 1.

L'enveloppe de pneumatique 1 à rechaper ayant été déchapée, on la monte sur la jante 6 et on gonfle la carcasse. Le montage sur la jante dès ce stade permet l'utilisation du même support, la jante 6, pour toutes les étapes du procédé. On peut également utiliser la jante pour réaliser les opérations d'usinage et de réparation, s'il y en a, de l'enveloppe de pneumatiques.

Afin de faciliter les manipulations, on positionne sur un support la jante 6 avec son axe vertical, le talon fixe 61 étant disposé vers le bas et l'ensemble du talon mobile 60 et du système de verrouillage 35 ayant été retiré de la virole 64.

On amène la carcasse de pneumatique 2 avec son axe vertical au-dessus de la jante 6 et on fait glisser ladite carcasse sur la virole 64 jusqu'à la butée du bourrelet inférieur de la carcasse, le bourrelet 22 selon les figures, sur le talon fixe 61.

On met alors en place sur la virole 64, le talon mobile 60 de sorte que sa surface de réception du bourrelet 21 soit orientée vers la carcasse de pneumatique 2 et on laisse coulisser ce talon 60, qui descend naturellement jusqu'au contact avec le bourrelet 21. De la même façon, on positionne d'une part le joint torique 40, préalablement graissé, sur la virole 64, et on fait glisser ce dernier jusqu'à ce qu'il vienne se mettre naturellement en place dans le logement circonférentiel 600 porté par le talon mobile 60, et, d'autre part, on positionne la rondelle d'appui 36 qui vient en butée sur le talon 60 et le joint 40.

On présente alors la couronne de verrouillage 37 sur la virole 64, on la fait glisser sur cette dernière puis tourner afin de réaliser le verrouillage.

La jante 6 étant verrouillée, on gonfle la carcasse 2 à l'aide de l'alimentation 66, ce qui vient pousser le bourrelet supérieur 21 qui refoule le talon 60 et la rondelle d'appui 36 jusqu'à la butée de contact sur la couronne 37, le joint torique 40 étant alors comprimés entre la rondelle d'appui 36 et le talon mobile 60 et assurant son étanchéité définitive.

Ces opérations qui ne nécessitent pas, comme on l'a vu, de précautions particulières mais constituent au contraire des opérations simples à réaliser, suffisent à obtenir le montage étanche de la carcasse 2 sur la jante 6.

Par ailleurs, l'enveloppe de pneumatique cuite sera également facilement extractible de cette jante puisque étant positionnée à nouveau verticalement. Suite au dégonflage de l'enveloppe de pneumatique, le bourrelet supérieur reprend sa position initiale et libère de toute contrainte la couronne de verrouillage 37, ce qui permet de réaliser aisément son déverrouillage par rotation puis de faire glisser vers l'extérieur de la jante les différents éléments extractibles.

L'étape de montage et de gonflage de la carcasse 2 étant terminée, on procède au gommage de celle-ci par la mise en place d'une bande de roulement crue, par exemple en procédant à une pose de mélange caoutchouteux sous forme de bandelettes précédée par la pose d'une couche intermédiaire, couramment appelée " gomme de liaison ".

Pour mettre en place le moule élastique 7 sur l'enveloppe de pneumatique 1, on procède d'abord à un allongement circonférentiel de ce dernier. Ainsi, on étire radialement le moule élastique 7, notamment par l'intermédiaire de ses ailes 73, 74, de sorte que son diamètre intérieur soit supérieur au diamètre extérieur de la bande de roulement 3. Avantageusement, on prévoit de traiter la surface intérieure du moule élastique 7 à l'aide d'un agent anti-adhésif permanent afin de permettre par la suite de réaliser l'opération de démoulage.

Le moule 7 étant maintenu dans cette position étirée, on place à l'intérieur de ce dernier l'enveloppe de pneumatique 1 de sorte que la bande de roulement 3 soit centrée axialement par rapport au moule 7. On relâche alors l'effort de traction exercé sur le moule 7 qui vient se comprimer sur la bande de roulement 3. Comme on l'a vu précédemment, les inserts métalliques 18 répartis sur la circonférence du moule 7 permettent de garantir l'épaisseur de gomme que l'on souhaite garder entre la carcasse 2 et le fond des sculptures, tout en favorisant l'extension radiale du moule lorsqu'ils sont soumis à des efforts de traction.

Divers types d'appareillages connus permettent de réaliser l'écartement et le maintien en position du moule lors de cette opération.

Pendant cette opération les ailes 161, 162 du manchon 16 peuvent être repliées sur ledit manchon donc sur le sommet du moule ou restées libres et donc posées sur les épaules 73, 74 dudit moule. Cependant, il est préférable avant la pose des flasques 8, 9, de replier les ailes 161, 162 sur le manchon afin de faciliter par la suite la liaison entre les flasques et le manchon.

Pour installer les flasques élastiques 8 et 9 sur l'enveloppe de pneumatique 1, on peut procéder en deux étapes consistant à positionner l'enveloppe de pneumatique 1 et sa jante 6 à axe vertical pour réaliser une pose à plat du premier flasque puis à retourner l'ensemble enveloppe sur jante pour déposer le deuxième flasque. Il est également possible de réaliser la pose du deuxième flasque sans retournement de l'enveloppe en prévoyant une accessibilité suffisante sous cette dernière. Ces opérations de mise en place étant identiques, on ne décrira la mise en place que d'un flasque.

Le flasque 8 se présentant sous forme d'un disque, il suffit de disposer ce dernier sur le flanc du pneumatique accessible, l'extrémité 81 étant en contact d'une part avec la surface 611 par son rebord 811 et d'autre part l'extrémité 82 portant l'élément de liaison 33 étant radialement au même niveau que le sommet du moule 7 ou dépassant légèrement radialement par rapport à ce dernier.

On positionne alors l'anneau 30 sur le rebord 811 afin de sécuriser la liaison étanche entre la jante 6 et le flasque 8 puis on rabat l'aile 162 du manchon 16 sur l'élément de liaison 33 et sur l'extrémité périphérique 82 du flasque 8, le tendeur 32 étant en place sur le flasque 8. La rigidité du flasque 8 permet à ces simples liaisons de le maintenir au contact du moule et du pneumatique.

Les flasques 8 et 9 ayant été mis en place, on évacue l'air compris entre le moule 7, les flasques 8, 9 et l'enveloppe de pneumatique 1 grâce à la valve 17 qui servira également plus tard à évacuer les gaz de vulcanisation. En effet, il est indispensable d'aspirer l'air emprisonné entre la bande de roulement 3 et le moule 7 de façon à obtenir une bonne capacité de reproductibilité et de moulage des sculptures de la bande de roulement.

Le manchon 16 vient se plaquer dans l'espace laissé libre au moment de la mise en place des flasques entre l'élément de liaison 33, le moule 7 et ledit manchon.

On peut alors placer à l'intérieur d'une étuve l'ensemble de l'enveloppe de pneumatique 1 et du dispositif de rechapage 5, afin de procéder à la vulcanisation de la bande de roulement. On prévoit par tout système approprié, le maintien d'une pression différentielle positive entre l'intérieur de l'enveloppe de pneumatique et l'étuve.

Pendant la phase de moulage où le moule élastique 7 pénètre dans la bande de roulement 3 et où son diamètre diminue donc le pli formé par le manchon 16 entre l'élément 33 et le moule 7 comme précisé un peu plus haut, permet d'assurer l'étanchéité du dispositif. La sollicitation qui s'exerce alors sur le manchon 16 est suffisamment peu importante pour ne pas nuire à sa résistance à l'usure. Ainsi le manchon 16 et les flasques 8 et 9 peuvent avoir une durée de vie importante.

Lorsque l'opération de vulcanisation est terminée, on sort l'ensemble de l'enveloppe de pneumatique cuite et du dispositif de rechapage de l'étuve. Il est alors très aisé de retirer les deux flasques, puis en utilisant le même appareillage que précédemment d'étirer le moule afin d'en extraire l'enveloppe de pneumatique rechapée montée sur sa jante, le démontage ultérieur de cette dernière ne posant pas, par ailleurs, de difficulté comme on l'a déjà signalé.

## Revendications

1. Dispositif de chapage d'une carcasse de pneumatique vulcanisée (2) à l'aide d'une bande de roulement crue (3) comprenant un moule annulaire élastique (7) dont la surface extérieure circonférentielle est recouverte d'un manchon élastique (16), le moule étant destiné à assurer le moulage de la bande de roulement crue (3), le dispositif étant **caractérisé en ce qu'**il comprend une jante de montage (6) de ladite carcasse et deux flasques (8, 9) élastiques en forme de disque destinés à recouvrir respectivement un flanc de l'ensemble composé de l'enveloppe de pneumatique constituée recouverte du moule (7), l'extrémité périphérique de plus grand diamètre (82, 92) de chaque flasque (8, 9) portant un élément annulaire rigide (33) (34) de liaison avec le manchon (16) recouvrant le moule (7).

2. Dispositif selon la revendication 1, dans lequel chaque élément annulaire rigide (33, 34) réalise une liaison élastique entre le manchon (16) recouvrant le moule (7) et le flasque (8, 9) portant ledit élément.

3. Dispositif selon l'une quelconque des revendications 1 ou 2, dans lequel le manchon élastique (16) recouvrant le moule (7) possède des ailes (162, 161) s'étendant circonférentiellement et susceptibles de recouvrir l'extrémité périphérique de plus grand diamètre (82, 92) de chaque flasque, l'extrémité libre de chaque aile (162,161) portant un tendeur radial annulaire (32,32').

4. Dispositif selon l'une quelconque des revendications 1 à 3, dans lequel les flasques (8, 9) sont réalisés à partir de caoutchouc butyl.

5. Dispositif selon l'une quelconque des revendications 1 à 4, dans lequel l'extrémité de plus petit diamètre (81, 91) de chaque flasque (8, 9) forme un rebord (811, 911) de fixation sur la jante (6) par l'intermédiaire d'un anneau (30, 31).

6. Dispositif selon la revendication 5, dans lequel chaque flasque (8, 9) forme un soufflet cylindrique à proximité de son rebord de fixation (811, 911) sur la jante (6).

7. Dispositif selon l'une quelconque des revendications 1 à 6, dans lequel chaque rebord (811, 911) de fixation sur la jante (6), porté par un des flasques (8, 9) coopère respectivement avec une surface (611, 601) porté par le talon de jante (61, 60) correspondant.

8. Dispositif selon l'une quelconque des revendications 1 à 7, dans lequel la jante comprend une chambre à air.

9. Dispositif selon l'une quelconque des revendications 1 à 7, dans lequel la jante (6) comprend un corps en une seule partie sous forme d'une virole (64) sur laquelle est monté un talon fixe (61) de support d'un bourrelet de la carcasse de pneumatique et un talon (60) de support de l'autre bourrelet coulissant axialement sur la virole (64) et extractible de cette dernière, la jante (6) comprenant également un système de verrouillage (35) limitant l'écartement maximum des talons (60, 61) l'un de l'autre, la carcasse étant gonflée par action directe d'un fluide sur ses parois intérieures.

10. Dispositif selon la revendication 9, dans lequel le système de verrouillage (35) de la jante (6) comprend une rondelle d'appui (36) du talon coulissant (60), elle-même montée coulissante sur la virole (64), et une couronne de verrouillage (37) qui coopère avec la virole (64).

## Patentansprüche

1. Vorrichtung zum Auflegen der Lauffläche auf eine vulkanisierte Luftreifenkarkasse (2) unter Verwendung eines unbehandelten Laufstreifens (3), die eine elastische Ringform (7) umfasst, deren äußere Umfangsfläche mit einer elastischen Manschette (16) bedeckt ist, wobei die Form das Abformen des unbehandelten Laufsteifens (3) sicherstellen soll, wobei die Vorrichtung **dadurch gekennzeichnet ist, dass** sie eine Montagefelge (6) für die Karkasse und zwei scheibenförmige elastische Flansche (8, 9) umfasst, die jeweils eine Seitenwand der Einheit bedecken sollen, die aus dem mit der Form (7) überzogenen aufgebauten Luftreifen zusammengesetzt ist, wobei das Umfangsende mit dem größeren Durchmesser (82, 92) der Flansche (8, 9) jeweils ein steifes ringförmiges Element (33, 34) zur Verbindung mit der Manschette (16), die die Form (7) bedeckt, trägt.

2. Vorrichtung nach Anspruch 1, worin jedes steife ringförmige Element (33, 34) eine elastische Verbindung zwischen der Manschette (16), die die Form (7) bedeckt, und dem Flansch (8, 9), der das Element trägt, herstellt.

3. Vorrichtung nach einem der Ansprüche 1 oder 2, worin die elastische Manschette (16), die die Form (7) bedeckt, Flügel (162, 161) besitzt, die sich in Umfangsrichtung erstrecken und geeignet sind, das Umfangsende mit dem größeren Durchmesser (82, 92) jedes Flansches zu überdecken, wobei das freie Ende der Flügel (162, 161) jeweils eine ringförmige radiale Spannvorrichtung (32, 32') trägt .

4. Vorrichtung nach einem der Ansprüche 1 bis 3, worin die Flansche (8, 9) aus Butylkautschuk hergestellt sind.

5. Vorrichtung nach einem der Ansprüche 1 bis 4, worin das Ende mit dem kleineren Durchmesser (81, 91) jedes Flansches (8, 9) einen Rand (811, 911) zur Befestigung auf der Felge (6) über einen Ring (30, 31) bildet.

6. Vorrichtung nach Anspruch 5, worin jeder Flansch (8, 9) in der Nähe seines Rands (811, 911) zur Befestigung auf der Felge (6) einen zylindrischen Balg bildet.

7. Vorrichtung nach einem der Ansprüche 1 bis 6, worin jeder Rand (811, 911) zur Befestigung auf der Felge (6), der sich an einem der Flansche (8, 9) befindet, jeweils mit einer Fläche (611, 601) zusammenwirkt, die von dem entsprechenden Felgenrand (61, 60) getragen wird.

8. Vorrichtung nach einem der Ansprüche 1 bis 7, worin die Felge einen Luftschlauch umfasst.

9. Vorrichtung nach einem der Ansprüche 1 bis 7, worin die Felge (6) einen Körper aus einem einzigen Teil in Form eines Reifs (64) umfasst, auf dem ein feststehender Rand (61), der einen der Wülste der Luftreifenkarkasse stützt, und ein Rand (60), der in axialer Richtung auf dem Reif (64) gleitet und von diesem abgenommen werden kann, als Stütze für den anderen Wulst angebracht sind, wobei die Felge (6) ferner ein Verriegelungssystem (35) umfasst, das den maximalen Abstand der Ränder (60, 61) zueinander begrenzt, wobei die Karkasse durch direkte Einwirkung eines Fluids auf ihre Innenwände aufgepumpt wird.

10. Vorrichtung nach Anspruch 9, worin das Verriegelungssystem (35) der Felge (6) eine Stützscheibe (36) für den gleitenden Rand (60), die selbst gleitend auf dem Reif (64) montiert ist, und einen Verriegelungsring (37) umfasst, der mit dem Reif (64) zusammenwirkt.

## Claims

1. Device for capping a vulcanised tyre (2) carcass using an uncured tread (3), comprising an elastic annular mould (7) whose circumferential outer surface is covered with an elastic sleeve (16), the mould being intended to mould the uncured tread (3), the device being **characterized in that** it comprises a rim (6) for mounting the said carcass and two disc-shaped elastic flanges (8, 9) intended to cover, respectively, one sidewall of the assembly composed of the constituted tyre covered with the mould (7), the larger-diameter peripheral end (82, 92) of each flange (8, 9) bearing a rigid annular member (33, 34) for connection with the sleeve (16) covering the mould (7).

2. Device according to Claim 1, in which each rigid annular member (33, 34) makes an elastic connection between the sleeve (16) covering the mould (7) and the flange (8, 9) bearing the said member.

3. Device according to either of Claims 1 and 2, in which the elastic sleeve (16) covering the mould (7) has wings (162, 161) extending circumferentially and able to cover the larger-diameter peripheral end (82, 92) of each flange, the free end of each wing (162, 161) bearing an annular radial tension device (32, 32').

4. Device according to any one of Claims 1 to 3, in which the flanges (8, 9) are made of butyl rubber.

5. Device according to any one of Claims 1 to 4, in which the smaller-diameter end (81, 91) of each flange (8, 9) forms a flange (811, 911) for fixing onto the rim (6) via a ring (30, 31).

6. Device according to Claim 5, in which each flange (8, 9) forms a cylindrical bellows in the vicinity of its flange (811, 911) for fixing onto the rim (6).

7. Device according to any one of Claims 1 to 6, in which each flange (811, 911) for fixing onto the rim (6), borne by one of the flanges (8, 9), engages, respectively, with a surface (611, 601) borne by the corresponding rim beading (61,60).

8. Device according to any one of Claims 1 to 7, in which the rim comprises an inner tube.

9. Device according to any one of Claims 1 to 7, in which the rim (6) comprises a one-piece body in the form of a ferrule (64) on which is mounted a fixed beading (61) for supporting a bead of the tyre carcass, and a beading (60) for supporting the other bead sliding axially on the ferrule (64) and removable therefrom, the rim (6) also comprising a locking system (35) for limiting the maximum separation of the beadings (60, 61) from each other, the carcass being inflated by the direct action of a fluid on its inner walls.

10. Device according to Claim 9, in which the system (35) for locking the rim (6) comprises a washer (36) for supporting the sliding beading (60), itself mounted sliding on the ferrule (64), and a locking crown (37) that engages with the ferrule (64).
